# EUROPEAN PATENT SPECIFICATION

(11) **EP 2 513 448 B1**
(45) Date of publication and mention of the grant of the patent: **13.11.2013**
(21) Application number: 10803260.8
(22) Date of filing: 14.12.2010
(51) Int. Cl.: F02B 23/06, F01L 3/20

(54) **INTERNAL COMBUSTION PISTON ENGINE ASSEMBLY**
KOLBEN FÜR EINE BRENNKRAFTMASCHINE
PISTON DE MOTEUR À COMBUSTION INTERNE

(30) Priority: 16.12.2009 FI 20096340
(43) Date of publication of application: 24.10.2012
(73) Proprietor: Wärtsilä Finland Oy, 65380 Vaasa (FI)
(72) Inventor: KULLA, Patrik, FI-66800 Oravainen (FI); NYNÄS, Håkan, FI-65280 Vaasa (FI); RINTA-TORALA, Harri, FI-65200 Vaasa (FI); SÄRS, Harry, FI-65370 Vaasa (FI)
(74) Representative: Ansala, Jyrki Matti
(86) International application number: PCT/FI2010/051019
(87) International publication number: WO 2011/073510

(56) References cited:
- JP-A- 8 004 534
- US-A- 5 363 820

## Description

### Technical field

The present invention relates to an internal combustion piston engine assembly comprising at least one cylinder, and a cylinder head arranged in connection with the cylinder provided with at least one inlet valve and at least one exhaust valve, a piston arranged in the cylinder movably between its top dead center and bottom dead center, in which bowl is arranged on the top of the piston provided with rotationally symmetrical top surface in respect of the longitudinal central axis thereof, which bowl comprises a middle region, and a substantially conical region extending radially towards a periphery region of the piston such that the depth of the bowl increases towards the periphery region of the piston and in which the periphery region has a top surface higher than the bottom of the bowl.

### Background art

A piston of an internal combustion engine transfers the energy released through the burning of fuel via a piston pin to a connecting rod and further to a crank mechanism. The piston is sealed to a cylinder of an engine by means of piston rings so that the transfer of energy would occur without unnecessary losses. A combustion chamber of internal combustion engine is defined partly by the upper part of a piston, cylinder liner and partly by a cylinder head. This area is subject to substantial thermal stresses. The walls of a piston extending in the longitudinal direction of the cylinder and located below the piston rings guide the movements of the piston and serve as lubrication surfaces. In modern compressor charged engines the pistons are under even more demanding circumstances.

The piston is connected to a crank shaft of the engine by means of a connecting rod which is connected to the piston with a pin at its one end and to the crank shaft by a big end bearing. Main constructional factors of an engine are bore/stroke ratio, rod length/stroke ratio. Important functional feature are among others compression ratio, valve timing, rotational speed, supercharging and fuel feeding issues.

Combustion of fuel in a compression ignition internal combustion engine and converting the energy of the fuel into mechanical work is influenced by various factors, some of those being process-related while some factors are relating to mechanical construction of the engine. The combustion process in a compression ignition engine is to a great extent effected by the shape of the combustion chamber. Therefore the shape of the upper part of the piston is of great significance to the performance of the engine.

There are various disclosures in prior art describing a rotationally symmetrical bowl arranged in the top of the piston. For example US patents 6,732,703, 6,966,294 and 7,210,448 show this kind of a shape of the upper part of the piston. The above-mentioned patents address to problems relating to recent demands of environmental issues involved in exhaust gases as well as soot migration over the piston rings to the lubrication oil. They mainly relate to the shape of the piston top and cooperation between the piston and the fuel injector, in which the shape of the piston bowl and the injection spray angle cause the spray plume to impinge upon and contact the piston bowl surface in a certain manner, after exiting the injector orifices. The main concern of the patents is emission control and particularly NOₓ emissions.

Compression ratio has great effect on the performance of engines. The compression ratio of the engine may be increased by allowing the top of the piston to come near the cylinder head. A limit for raising the piston top is often the clearance to the gas exchange valves particularly when scavenging of the combustion space is performed between exhaust and intake strokes of the engine.

It is known in prior art to provide a space for a valve into the piston top (valve pocket) which space is just big enough for the valve to fit in it. Around the space the piston top may be raised higher to increase the compression rate. Such discontinuity spots, like the edge of the valve spaces i.e. pockets, restricts the scavenging gas flow around the valves and result in poorer gas exchange. Such discontinuity spots affect the combustion process restricting the swirl formation in the combustion space of the piston.

Such pockets also prohibit gas swirl in the cylinder and this results in deteriorated combustion with higher emissions. Also forming of hot spots on the piston top is common when such valve pockets are used.

For example publication JP 2007309176 shows a piston top into which a space for a valve is provided at the location of each valve. In this case the space substantially coincides with the shape of the valve but the top surface of the piston is no longer rotationally symmetrical due to the discontinuity caused by the valve spaces.

Publication N 08 0045 34 A discloses valves with protruding parts for reducing the quantity of fuel stack on the cavity of the piston.

There has now emerged a need of further developing the construction and operation of a compression ignition four stroke engine so that even more improved performance of the engine may be provided.

A particular object of the invention is to provide a compression ignition four stroke engine in which the compression ratio is increased without compromising the combustion process and the performance of the engine.

It is also an object of the invention to provide a method of manufacturing a fuel injection nozzle which method is simple to carry out and by means of which high pressure fuel injectors can be produced.

### Disclosure of the Invention

Objects of the invention are substantially met by an internal combustion piston engine assembly comprising at least one cylinder, and a cylinder head arranged in connection with the cylinder provided with at least one inlet valve and at least one exhaust valve, a piston arranged in the cylinder movably between its top dead center and bottom dead center, in which a bowl is arranged on the top of the piston provided with a rotationally symmetrical top surface in respect of the longitudinal central axis thereof, which bowl comprises a middle region, and a substantially conical region extending radially towards a periphery region of the piston such that the depth of the bowl increases towards the periphery region of the piston and in which the periphery region has a top surface higher than the bottom of the bowl. Each of the valves is provided with a bottom surface comprising an extension which extends from a plane formed by the rim of the valve disk edge to a direction opposite to the stem of the valve such that in the assembly the extension fits into the space between the cylinder head and the bowl of the piston. It is characteristic of the invention that the valves are provided with the bottom surface having a convex surface so that the convex surface is arranged to face the rotationally symmetrical piston top surface of the conical region of the piston top.

This makes it possible to have Increased engine efficiency by thus obtained an increased compression ratio together with enhanced flow characteristics of the combustion space.

According to an embodiment the valves are provided with the bottom surface having a convex surface so that the convex surface is arranged to face the rotationally symmetrical piston top surface of the conical region of the piston top.

According to a preferred embodiment of the invention the bottom surface of the valves coincide with the shape of the top of the piston at the conical region of the piston top.

The piston bowl has preferably a rotationally symmetrical depth at each radial position forming a smooth and continuous surface.

The extension in the bottom surface of the valve facing the piston is arranged to extend towards the top of the piston from the level of the cylinder head at the closed positions of the valves.

According to an embodiment of the invention the longitudinal axis of the valve is parallel with the longitudinal axis of the piston.

According to another embodiment of the invention the longitudinal axis of the valve is at an angle with respect to the longitudinal axis of the piston i.e. longitudinal axis of the valve is tilted in respect of the longitudinal axis of the piston.

The compression volume is defined by rotationally symmetrical piston top bowl and the cylinder head surface and the compression volume is locally limited by the convex bottom surfaces of the valves extending from the level of the cylinder head for enhancing the combustion.

According to an embodiment of the invention the cylinder head is provided with at least one fuel injection nozzle with at least a first fuel feed orifice and a second fuel feed orifice and the first fuel feed orifice is directed at a first angle in respect to the longitudinal axis of the piston and the second fuel feed orifice is directed at a second angle with respect to the longitudinal axis of the piston. Further, the first fuel feed orifice is arranged to direct the fuel jet in the direction of the convex surface of the valves and the second fuel feed orifice is arranged to direct the fuel jet past the direction of the convex surface of the valves.

Additionally the extension in the bottom surface of the valve increases the thickness in the centre area of the valve, which increases the stiffness of the valve disk. Further the gas flow out and into the cylinder is virtually unaffected by the stiffening of the disk. Additionally the lifetime of the valve is longer due to the fact that there is more material to be burned off in the centre area of the valve before it reduces to a minimum thickness.

### Brief Description of Drawings

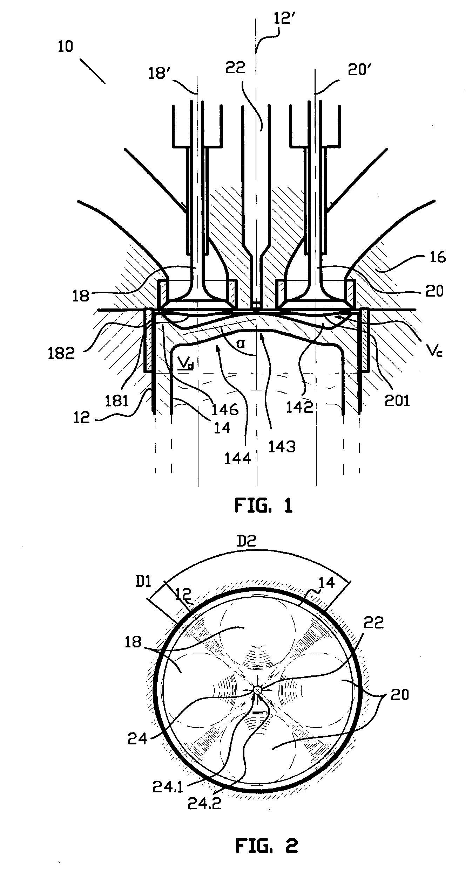

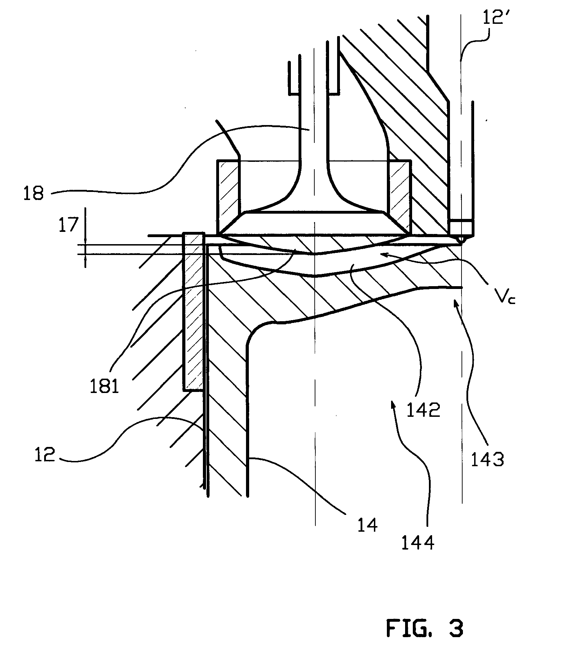

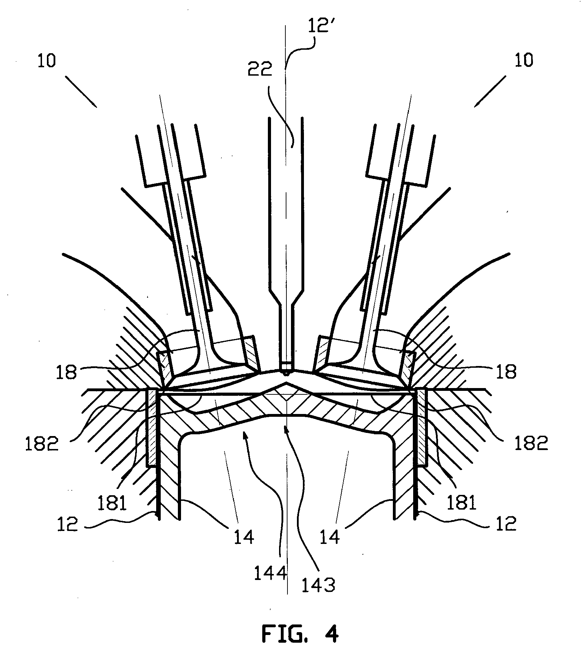

In the following, the invention will be described with reference to the accompanying exemplary, schematic drawings, in which
o Figure 1 illustrates schematically a part of a cylinder of a piston engine according to an embodiment of the invention,
o Figure 2 illustrates a top of the piston in the cylinder seen from above thereof,
o Figure 3 illustrates another embodiment of the invention, and
o Figure 4 illustrates a still another embodiment of the invention.

### Detailed Description of Drawings

Figure 1 illustrates schematically a part of a piston engine. There is shown an assembly comprising a cylinder 12, a cylinder head 16 and a piston 14 arranged in the cylinder 12. The cylinder head 16 is provided with at least one inlet valve 18 and at least one exhaust valve 20, but typically there are two of the each type of valves arranged into the cylinder head 16. The piston 14 is arranged to be reciprocated in the cylinder 1 2 during the operation of the piston engine. There is also at least one fuel injection nozzle 22 arranged in connection with the cylinder head 16.

The top of the piston 14 is provided with a bowl 142. The bowl in the piston is substantially rotationally symmetrical in respect to the common longitudinal central axis of the piston 14 and the bore of the cylinder 12.

The piston 14 is arranged in the cylinder movably between its top dead center (TDC) and bottom dead center (BDC). The position of the piston at the top dead center is shown with a solid line and at the bottom dead center with a dashed line. The volume swept by the piston 14 in its movement between the top dead center (TDC) and the bottom dead center (BDC) is a displacement volume V_{d} and the volume remaining above the piston at its top dead center (TDC) is a clearance volume V_{c}. Thus the compression ratio CR equals to (V_{d}+V_{c})/V_{c}. The bowl 142 of the piston in turn comprises a middle region 143, and a conical region 144 extending radially towards the periphery of the piston. The conical region surrounds radially the middle region of the piston top. The conical region is directed downwardly at an angle α such that the depth of the bowl increases towards the periphery of the piston 14. The conical region 144 functions as a surface to which bottom surfaces of the valves are facing. The top of the piston 14 is also provided with a periphery region 146 which has a top surface higher than the bottom of the bowl. In this context the terms "higher" and "downwardly" etc. mean the position in respect to the longitudinal central axis 12'.

Now, each of the valves 18, 20 is provided with a bottom surface comprising an extension 181, 201 which extends from a plane formed by a rim of the valve edge 182 to a direction opposite to the stem of the valve. In practise that means downwardly towards the top of the piston 14. In figure 1 the extension forms a convex surface 181, 201.which surface is arranged to face the continuous top surface of the piston bowl. The actual shape of the convex surface may vary depending on the particular application. The piston bowl 142 is according to an advantageous embodiment rotationally symmetrical and continuous i.e. continuously rotationally symmetrical. In practise it means that the bowl 142 surface is arranged not to include any substantial discontinuity locations like distinct valve pockets. In other words the bowl 142 surface is arranged free from substantial discontinuity locations. The top surface of the bowl being continuous means particularly that there are no special cavities for the valves, like valve pockets, but the shape of the bowl functions also as the required space for the valves.

In the assembly the combination of the continuous surface of the bowl and the downwardly extending surface 181 of the valves makes it possible to arrange the piston to come generally closer to the cylinder head 16 at the top dead center position. The extension 181, 201 is arranged such that in the assembly the extension 181, 201 fits into the space between the cylinder head 16 and the bowl of the piston 14. Thus the clearance volume V_{c} remains smaller. Simultaneously the assembly provides a smooth piston surface in order to maintain proper flow characteristics of combustion space. Smaller clearance volume V_{c} increases the compression ratio. This also makes it possible to maintain a higher compression ratio with a possibility to provide scavenging operation by slightly opening the valves without a risk of the valves hitting the piston top and without using valve pockets. This also provides advantageous circumstances for an efficient combustion due to formation of a substantially unobstructed swirl of the gases in the combustion space.

Thus a combined effect obtained by the assembly in which the piston the bowl 142 with a middle region 143, and the conical region 144 extending radially towards the periphery of the piston at an angle α such that the depth of the bowl increases towards the periphery of the piston 14 and the valves being provided with a bottom surface comprising an extension 181, 201 which extends from a plane formed be the rim of the valve edge 182 to a direction opposite to the stem of the valve, are arranged to cooperate with each other, provides enhanced combustion of fuel together with a higher efficiency of the engine.

It should be understood that the angle α describes a general orientation of the conical region 144 of the piston top and that the angel is not typically constant. The extension 181, 201 of the valve may be constructed of the same material as the valve. It may be a solid structure or it may comprise a cavity inside so that the extension and the valve disk form a hollow structure. The cavity may be filled with a special substance to have effect on thermal and/or strength properties of the valve.

In Figure 2 there is shown a top of the piston 14 in the cylinder 12 seen from above thereof. Also the valves 18, 20 (dashed line) above the piston are depicted in the figure 2. The fuel injection nozzle 22 is provided with fuel injection orifices 24. According to an embodiment of the invention there are at least two sets of orifices 24.1, 24.2 provided in the fuel injection nozzle. The actual number of orifices in each set of orifices may vary. The first set of injection orifices 24.1 is directed substantially to a sector D1 outside the area covered by the valves. In other words the first set of injection orifices 24.1 is directed so that the fuel jet passes substantially between two adjacent valves.

The second set of injection orifices 24.2 is directed substantially to a sector D2 inside the area covered by the valves. In other words the first set of injection orifices 24.2 is directed so that the fuel jet passes substantially below the extension 181, 201 of the valve. The first and the second set for injection orifices are preferably directed at different angles with respect to the longitudinal axis 12' of the cylinder 12 and the piston 14.

In figure 3 there is shown another embodiment of the invention in which the cross section of the extension 181 of the valve 18 and the cross section of the continuous top surface of the piston bowl 142 convex surface valve form counter surfaces having forms corresponding to each other. Also in this embodiment the top surface of the bowl 142 is rotationally symmetrical. Here, the piston may be brought considerably close to the cylinder head providing a considerably small clearance volume V_{c}. It can be also seen from figure 3 that the downwardly extending surface 181 of the valve 18 extends a distance 17 below the top surface of the periphery region 146 of the piston.

In figure 4 there is shown still another embodiment of the invention. In this embodiment the valves are slanted in respect to the longitudinal axis 1 2' of the cylinder 12 and the piston14. The middle region 143 is higher than the periphery region of the piston, and the cylinder head is respectively formed having a higher middle region. The fuel injection nozzle 22 is arranged to the middle region of the cylinder head.

According to a preferred embodiment of the invention the convex surface 181, 201 of the valves is rotationally symmetrical in respect to the centre axis 18', 20' of the valve.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. An internal combustion piston engine assembly comprising at least one cylinder (12), and a cylinder head (16) arranged in connection with the cylinder provided with at least one inlet valve (18) and at least one exhaust valve (20), a piston (14) arranged movably in the cylinder between its top dead center (TDC) and bottom dead center (BDC), in which a bowl (142) is arranged on the top of the piston (14) provided with a rotationally symmetrical top surface in respect of the longitudinal central axis (12') thereof, which bowl (142) comprises a middle region (143), and a substantially conical region (144) extending radially towards a periphery region of the piston such that the depth of the bowl increases towards the periphery region of the piston (14) and in which the periphery region has a top surface higher than the bottom of the bowl, in which each of the valves is provided with a bottom surface comprising an extension (181, 201) which extends from a plane formed by the rim of the valve disk edge (182) to a direction opposite to the stem of the valve such that in the assembly the extension (181, 201) fits into the space between the cylinder head (16) and the rotationally symmetrical top surface of the bowl of the piston (14), , **characterized in that** the valves are provided with the bottom surface having a convex surface (181, 201) so that the convex surface is arranged to face the rotationally symmetrical piston (14) top surface of the conical region of the piston top.

2. An internal combustion piston engine assembly according to claim 1, **characterized in that** the bottom surface of the valves coincide with the shape of the top of the piston (14) at the conical region of the piston top.

3. An internal combustion piston engine assembly according to claim 1, **characterized in that** the surface of the piston bowl has a rotationally symmetrical depth at each radial position.

4. An internal combustion piston engine assembly according to claim 1, **characterized in that** the extension (181) of the valve (18) extends a distance (17) below the top surface of the periphery region (146) of the piston.

5. An internal combustion piston engine assembly according to anyone of the preceding claims, **characterized in that** the bottom surface of the valves facing the piston (14) is arranged to extend towards the top of the piston (14) from the level of the cylinder head (16) at the closed positions of the valves.

6. An internal combustion piston engine assembly according to anyone of the preceding claims 1-4, **characterized in that** the valve longitudinal axis is parallel with the longitudinal axis of the piston (14).

7. An internal combustion piston engine assembly according to anyone of the preceding claims 1-4, **characterized in that** the valve longitudinal axis is tilted in respect of the longitudinal axis of the piston (14).

8. An internal combustion piston engine assembly according to claim 5, **characterized in that** compression volume of the cylinder is defined by the continuously rotationally symmetrical piston top bowl and the cylinder head (16) surface, and that the compression volume is locally limited by the convex bottom surfaces of the valves extending from the level of the cylinder head (16) for enhancing the combustion.

9. An internal combustion piston engine assembly according to anyone of the preceding claims 1-4, **characterized in that** the cylinder head (16) is provided with at least one fuel injection nozzle (22) with at least a first fuel feed orifice (24.1) and a second fuel feed orifice (24.2) and that the first fuel feed orifice is directed at a first angle in respect to the longitudinal axis of the piston (14) and the second fuel feed orifice is directed at a second angle in respect to the longitudinal axis of the piston (14), and that the first fuel feed orifice is arranged to direct the fuel jet In the direction of the convex surface of the valves and that the second fuel feed orifice is arranged to direct the fuel jet past the direction of the convex surface of the valves.

## Patentansprüche

1. Verbrennungskolbenkraftmaschinen-Baugruppe, die Folgendes umfasst:
wenigstens einen Zylinder (12) und einen in Verbindung mit dem Zylinder angeordneten Zylinderkopf (16), der mit wenigstens einem Einlassventil (18) und wenigstens einem Auslassventil (20) versehen ist, einen beweglich in dem Zylinder zwischen dessen oberen Totpunkt (OT) und unteren Totpunkt (UT) angeordneten Kolben (14), in dem eine Mulde (142) im Oberteil des Kolbens (14) angeordnet ist, versehen mit einer in Bezug auf die Längsmittelachse (12') desselben rotationssymmetrischen oberen Fläche, wobei die Mulde (142) einen mittleren Bereich (143) und einen im Wesentlichen kegelförmigen Bereich (144), der sich in Radialrichtung zu einem Umfangsbereich des Kolbens hin erstreckt, umfasst derart, dass die Tiefe der Mulde zu dem Umfangsbereich des Kolbens (14) hin zunimmt, und wobei der Umfangsbereich eine obere Fläche hat, die höher ist als die Sohle der Mulde, wobei jedes der Ventile mit einer unteren Fläche versehen ist, die eine Erweiterung (181, 201) umfasst, die sich von einer durch den Rand der Ventiltellerkante (182) gebildeten Ebene zu einer zu dem Schaft des Ventils entgegengesetzten Richtung erstreckt derart, dass beim Zusammenbau die Erweiterung (181, 201) in den Raum zwischen dem Zylinderkopf (16) und der rotationssymmetrischen oberen Fläche der Mulde des Kolbens (14)passt, **dadurch gekennzeichnet, dass** die Ventile mit der unteren Fläche versehen sind, die eine konvexe Oberfläche (181, 201) hat, so dass die konvexe Oberfläche so angeordnet ist, dass sie der rotationssymmetrischen oberen Fläche des Kolbens (14)des kegelförmigen Bereichs des Kolbenoberteils gegenüberliegt.

2. Verbrennungskolbenkraftmaschinen-Baugruppe nach Anspruch 1, **dadurch gekennzeichnet, dass** die untere Fläche der Ventile mit der Form des Oberteils des Kolbens (14) an dem kegelförmigen Bereich des Kolbenoberteils übereinstimmt.

3. Verbrennungskolbenkraftmaschinen-Baugruppe nach Anspruch 1, **dadurch gekennzeichnet, dass** die Oberfläche der Kolbenmulde an jeder radialen Position eine rotationssymmetrische Tiefe hat.

4. Verbrennungskolbenkraftmaschinen-Baugruppe nach Anspruch 1, **dadurch gekennzeichnet, dass** sich die Erweiterung (181) des Ventils (18) eine Strecke (17) unterhalb der oberen Fläche des Umfangsbereichs (146) des Kolbens erstreckt.

5. Verbrennungskolbenkraftmaschinen-Baugruppe nach einem der vorhergehenden Ansprüche, **dadurch gekennzeichnet, dass** die dem Kolben (14) gegenüberliegende untere Fläche der Ventile so angeordnet ist, dass sie sich bei den geschlossenen Stellungen der Ventile von dem Niveau des Zylinderkopfes (16) zu dem Oberteil des Kolbens (14) hin erstreckt.

6. Verbrennungskolbenkraftmaschinen-Baugruppe nach einem der vorhergehenden Ansprüche 1 bis 4, **dadurch gekennzeichnet, dass** die Ventillängsachse parallel zu der Längsachse des Kolbens (14) ist.

7. Verbrennungskolbenkraftmaschinen-Baugruppe nach einem der vorhergehenden Ansprüche 1 bis 4, **dadurch gekennzeichnet, dass** die Ventillängsachse in Bezug auf die Längsachse des Kolbens (14) geneigt ist.

8. Verbrennungskolbenkraftmaschinen-Baugruppe nach Anspruch 5, **dadurch gekennzeichnet, dass** das Verdichtungsvolumen des Zylinders durch die kontinuierlich rotationssymmetrische Kolbenoberteilmulde und die Oberfläche des Zylinderkopfes (16) definiert wird und dass das Verdichtungsvolumen örtlich durch die sich von dem Niveau des Zylinderkopfes (16) aus erstreckenden konvexen unteren Flächen der Ventile begrenzt wird, um die Verbrennung zu verbessern.

9. Verbrennungskolbenkraftmaschinen-Baugruppe nach einem der vorhergehenden Ansprüche 1 bis 4, **dadurch gekennzeichnet, dass** der Zylinderkopf (16) mit wenigstens einer Kraftsoff-Einspritzdüse (22) mit wenigstens einer ersten Kraftstoff-Zufuhröffnung (24.1) und einer zweiten Kraftstoff-Zufuhröffnung(24.2) versehen ist und dass die erste Kraftstoff-Zufuhröffnung in einem ersten Winkel in Bezug auf die Längsachse des Kolbens (14) gerichtet ist und die zweite Kraftstoff-Zufuhröffnung in einem zweiten Winkel in Bezug auf die Längsachse des Kolbens (14) gerichtet ist und dass die erste Kraftstoff-Zufuhröffnung dafür angeordnet ist, den Kraftstoffstrahl in der Richtung der konvexen Fläche der Ventile zu richten, und dass die zweite Kraftstoff-Zufuhröffnung dafür angeordnet ist, den Kraftstoffstrahl vorbei an der Richtung der konvexen Fläche der Ventile zu richten.

## Revendications

1. Ensemble de moteur à piston à combustion interne comprenant au moins un cylindre (12) et une tête de cylindre (16) agencée en raccord avec le cylindre pourvue d'au moins une soupape d'admission (18) et au moins une soupape d'échappement (20), un piston (14) agencé de manière mobile dans le cylindre entre son point mort haut (TDC) et son point mort bas (BDC), dans lequel une cuvette (142) est agencée au sommet du piston (14) pourvu d'une surface de sommet symétrique rotativement par rapport à l'axe centrale longitudinal (12') de celui-ci, laquelle cuvette (142) comprend une région centrale (143) et une région substantiellement conique (144) s'étendant radialement vers une région périphérique du piston de sorte que la profondeur de la cuvette augmente vers la région périphérique du piston (14) et dans lequel la région périphérique a une surface de sommet plus haute que le fond de la cuvette, dans laquelle chacune des soupapes est pourvue d'une surface de fond comprenant une extension (181,201) qui s'étend à partir d'un plan formé par le rebord du bord de disque de soupape (182) vers une direction opposée à la tige de la soupape de sorte que dans l'ensemble l'extension (181,201) s'ajuste dans l'espace entre la tête de cylindre (16) et la surface de sommet symétrique rotativement de la cuvette du piston (14), **caractérisé en ce que** les soupapes sont pourvues de la surface de fond ayant une surface convexe (181,201) de sorte que la surface convexe soit agencée de manière à faire face à la surface de sommet du piston symétrique rotativement (14) de la région conique du sommet de piston.

2. Ensemble de moteur à piston à combustion interne selon la revendication 1, **caractérisé en ce que** la surface de fond des soupapes coïncide avec la forme du sommet du piston (14) de la région conique du sommet de piston.

3. Ensemble de moteur à piston à combustion interne selon la revendication 1, **caractérisé en ce que** la surface de la cuvette de piston a une profondeur symétrique rotativement à chaque position radiale.

4. Ensemble de moteur à piston à combustion interne selon la revendication 1, **caractérisé en ce que** l'extension (181) de la soupape (18) s'étend à une distance (17) au-dessous de la surface de sommet de la région périphérique (146) du piston.

5. Ensemble de moteur à piston à combustion interne selon une quelconque des revendications précédentes, **caractérisé en ce que** la surface de fond des soupapes faisant face au piston (14) est agencée afin de s'étendre vers le sommet du piston (14) à partir du niveau de la tête de cylindre (16) aux positions fermées de soupapes.

6. Ensemble de moteur à piston à combustion interne selon une quelconque des revendications précédentes 1-4, **caractérisé en ce que** l'axe longitudinale de soupape est parallèle à l'axe longitudinal du piston (14).

7. Ensemble de moteur à piston à combustion interne selon une quelconque des revendications précédentes 1-4, **caractérisé en ce que** l'axe longitudinal de soupape est incliné par rapport à l'axe longitudinal du piston (14).

8. Ensemble de moteur à piston à combustion interne selon la revendication 5, **caractérisé en ce que** le volume de compression du cylindre est défini par la cuvette de sommet du piston symétrique rotativement en continu et la surface de tête de cylindre (16), et **en ce que** le volume de compression est limité localement par les surfaces de fond convexes des soupapes s'étendant à partir du niveau de la tête de cylindre (16) pour améliorer la combustion.

9. Ensemble de moteur à piston à combustion interne selon les revendications précédentes 1-4, **caractérisé en ce que** la tête de cylindre (16) est pourvue d'au moins une buse d'injection de carburant (22) avec au moins un premier orifice d'alimentation en carburant (24.1) et un second orifice d'alimentation en carburant (24.2) et **en ce que** le premier orifice d'alimentation en carburant est orienté à un premier angle par rapport à l'axe longitudinal du piston (14) et le second orifice d'alimentation en carburant est orienté à un second angle par rapport à l'axe longitudinal du piston (14), et **en ce que** le premier orifice d'alimentation en carburant est agencé afin d'orienter le jet de carburant dans la direction de la surface convexe des soupapes et **en ce que** le second orifice d'alimentation en carburant est agencé afin d'orienter le jet de carburant au-delà de la direction de la surface convexe des soupapes.
